## Europäisches Patentamt

(19) **European Patent Office**

**Office européen des brevets**

(11) Numéro de publication: **0 019 573**
**B1**

(12) # FASCICULE DE BREVET EUROPEEN

(45) Date de publication du fascicule du brevet:
09.11.83

(51) Int. Cl.³: **C 09 K 5/06**

(21) Numéro de dépôt: **80430010.1**

(22) Date de dépôt: **06.05.80**

(54) Matériau absorbeur et accumulateur de calories sous forme de chaleur latente et applications.

(30) Priorité: **17.05.79 FR 7913296**

(43) Date de publication de la demande:
**26.11.80 Bulletin 80/24**

(45) Mention de la délivrance du brevet:
**09.11.83 Bulletin 83/45**

(84) Etats contractants désignés:
**AT BE CH DE GB IT LI LU NL SE**

(56) Documents cités:
**DE - A - 2 643 895**

**CHEMICAL ABSTRACTS, vol. 84, 1976 page 177, ref
108449b Columbus, Ohio, US**

(73) Titulaire: **ANVAR Agence Nationale de Valorisation de la
Recherche, 13, rue Madeleine Michelis,
F-92522 Neuilly-sur-Seine (FR)**

(72) Inventeur: **Schneider, Michel, Petite Plarète - Avenue
Olivia, F-06230 - Villefranche-sur-Mer (FR)**
Inventeur: **Sylvain, Jean-Denis, 56, Avenue Denis
Semeria, F-06300 - Nice (FR)**
Inventeur: **Berger, Xavier, La Radiane - Chemin des
Chauves, F-06860 - Opio Grace (FR)**
Inventeur: **Jaffrin, André, 3, Avenue Edith Cavell,
F-06200 - Nice (FR)**
Inventeur: **Bourdeau, Luc, 64, Boulevard Napoléon III,
F-06200 - Nice (FR)**

(74) Mandataire: **Azais, Henri et al, c/o CABINET BEAU DE
LOMENIE 14, rue Raphael, F-13008 Marseille (FR)**

**0 019 573**

## Matériau absorbeur et accumulateur de calories sous forme de chaleur latente et applications

La présente invention a pour objet un nouveau matériau absorbeur et accumulateur de calories sous forme de chaleur latente de fusion et des applications de ce matériau.

Le secteur technique de l'invention est celui de la captation et de l'accumulation de l'énergie solaire.

On a déjà proposé d'utiliser la chaleur latente de fusion-solidification de produits ayant une température de fusion située dans la gamme des températures comprises entre 15° et 35° pour capter et stocker l'énergie solaire. Cette solution présente l'avantage que la captation et la restitution d'énergie se font à température constante comprise dans une plage qui corresponde à la fois aux températures courantes de chauffage des locaux et aux températures des absorbeurs de rayonnement solaire.

Les brevets français 69/17129, 72/33195, 1 050 933 et les brevets U.S.A. 2 595 905, 2 677 243 et 2 989 856 décrivent divers matériaux à base de sels hydratés qui sont proposés comme accumulateurs de chaleur.

Les matériaux les mieux adaptés à une utilisation comme capteurs d'énergie solaire et accumulateurs de celle-ci sous forme de chaleur latente de fusion-solidification, doivent présenter un certain nombre de propriétés et notamment les suivantes.

Ils doivent avoir une température de fusion comprise entre 15° C et 35° C.

Ils doivent avoir une forte chaleur latente massique de fusion.

Ils doivent être peu onéreux.

Ils doivent être faciles à utiliser (non toxiques, non corrosifs).

Ils ne doivent pas, autant que possible, présenter des phénomènes de surfusion.

Enfin, la reproductibilé des propriétés physiques du matériau doit se conserver au cours de nombreux cycles successifs car les cycles se répètent tous les jours ou presque.

Les deux dernières propriétés sont difficiles à obtenir ce qui explique que l'utilisation de ces matériaux ne soit pas encore très développée.

Le problème de la surfusion des sels hydratés peut être résolu en ajoutant à ceux-ci un agent nucléant qui a une température de fusion plus élevée et dont le réseau cristallin a une structure analogue à celle de l'hydrate salin (agent épitaxique), de sorte qu'il constitue des germes de cristallisation.

Par contre, la conservation et la répétitivité des propriétés physico-chimiques au cours de nombreux cycles est essentielle et elle est mal résolue à ce jour. Celle-ci est liée à la complexité du diagramme de phase dans la région de température utilisée.

La fusion des sels hydratés implique des phénomènes de dissolution dans l'eau de cristallisation et compliquent le problème. Si la solubilité de l'hydrate dans l'eau aux températures supérieures à la température de fusion est supérieure à la proportion de sel anhydre dans l'hydrate, il n'apparaît aucun précipité dans la phase liquide et la fusion est dite congruente. Dans le cas contraire, où la fusion est non congruente, de l'anhydride sédimente dans la phase liquide car la densité de l'anhydride est généralement supérieure à celle de la phase liquide et l'existence de ce précipité qui ralentirait les phénomènes de cristallisation et la vitesse de restitution de la chaleur latente de fusion doit être évitée.

Parmi les hydrates salins utilisables, l'hexahydrate de chlorure de calcium ($CaCl_2$, $6H20$) est particulièrement intéressant. Lorsqu'il est à l'état pur, l'hexahydrate de chlorure de calcium a une température de fusion de 29,8° C et une chaleur de fusion de 170 Kj/Kg. Le chlorure de calcium industriel contient diverses impuretés et les propriétés physiques sont légèrement modifiées en fonction de la nature et de la teneur des impuretés.

La température de fusion de l'hexahydrate de chlorure de calcium industriel est de l'ordre de 28° C ± 0,5° C. La chaleur de fusion est de l'ordre de 145 Kj/Kg ± 8 Kj/Kg.

Le chlorure de calcium industriel contient, à l'état d'impuretés, du chlorure de strontium dont l'hexahydrate fond à 61° C et constitue un agent nucléant de l'hexahydrate de chlorure de calcium. Le chlorure de calcium industriel est un sous-produit très abondant de la fabrication du carbonate de sodium à partir du chlorure de sodium et du carbonate de calcium (procédé Solvay) $2NaCl + CaCO_3 \rightarrow Na_2CO_3 + CaCl_2$.

Les applications du chlorure de calcium sont peu nombreuses et c'est donc un produit trés bon marché qui constitue même un déchet et un facteur de pollution, dont il est très intéressant de trouver des applications. Malgré toutes les propriétés avantageuses de l'hexahydrate du chlorure de calcium qui viennent d'être énumérées, ce produit n'a être utilisé industriellement à ce jour car la fusion est semi congruente et il est très difficile de conserver ses propriétés physico-chimiques inchangées pendant un grand nombre de cycles successifs de fusion-cristallisation.

En effet, le chlorure de calcium anhydre peut former avec l'eau non seulement de l'hexahydrate mais aussi du monohydrate, du dihydrate et plusieurs tétrahydrates $\alpha$, $\beta$ et $\gamma$.

Dans la phase liquide, il peut se produire des effets de stratification conduisant à des différences de titre avec formation, lors du refroidissement, de tétrahydrate $\alpha$ qui cristallise à 32° C.

Pour éviter les inconvénients dus à la non congruence, on a déjà proposé d'ajouter au matériau un

2

agent stabilisant ou épaississant qui évite les ségrégations gravimétriques ou les stratifications de la phase liquide.

Le brevet FR 69/17129 a pour objet des matériaux accumulateurs de chaleur latente à base de sel de Glauber, (Na2SO4 10H20) ou à base d'hydrates de sels doubles ou à base d'eutectiques contenant un agent nucléant et un support ou armature destiné à maintenir les particules d'agent nucléant bien réparties dans la phase liquide et qui permet d'obtenir un matériau de forme invariable qui n'a pas besoin d'être enfermé dans un récipient. Ce brevet cite l'utilisation antérieure comme armature d'amidon ou de bois de Balsa imprégné. Il propose d'ajouter à de telles armatures des fibres de verre moulues ou des matières minérales ayant une structure cristalline fibreuse, par exemple des zéolithes ou des silicates ou aluminates fibreux ou floconneux.

Le brevet français 1 050 933 décrit un matériau accumulateur de chaleur à base d'hydrates de phosphate disodique ou de sulfate de soude auquel on ajoute un amorceur de cristallisation constitué par du verre cellulaire ou de la laine de verre contenant du calcium qui sont frittés.

Les brevets U.S. 2 595 905 et U.S. 2 677 243 citent l'utilisation possible d'hexahydrate de chlorure de calcium sans aucun agent stabilisant.

Le brevet U.S. 2 989 856 décrit des matériaux accumulateurs de chaleur composés de divers mélanges de sulfate de soude, de chlorure de sodium ou de sulfate de magnésium qui sont absorbés dans des blocs poreux solides de bois de Balsa, de matière plastique en mousse ou de mica expansé.

Le brevet U.S. 3 986 969 décrit des matériaux accumulateurs de chaleur composés d'un hydrate salin, auquel on ajoute un agent épaississant qui est une argile thixotropique, par exemple de l'attapulgite ou de la sepiolite.

Dans la description de l'art antérieur de ce dernier brevet, il est précisé que divers agents épaississants ont été essayés dans le but de produire un gel dans lequel les hydrates ne sédimentent pas, même après plusieurs changements d'état successifs.

Parmi les agents épaississants essayés, ce brevet cite la sciure et les déchets de bois, des mélanges cellulosiques, l'amidon, des alginates et des produits inorganiques tels que des gels de silice, des diatomites et d'autres produits siliceux finement divisés. Il est précisé ces agents épaississants ne produisent leurs effets que pendant un nombre de cycles limités.

Un objectif de la présente invention est de procurer des moyens permettant d'utiliser les hydrates salins, congruents ou non congruents, comme absorbeurs et/ou accumulateurs de calories, notamment d'énergie solaire, sous forme de chaleur latente de fusion, en incorporant à ces sels un agent stabilisant qui permet de répéter un très grand nombre de cycles successifs de fusion-cristallisation sans que les propriétés physico-chimiques de l'hydrate ne soient altérées.

Un autre objectif de la présente invention est de procurer des moyens permettant d'utiliser notamment l'hexahydrate de chlorure de calcium comme absorbeur et/ou accumulateur d'énergie solaire.

On a vu que plusieurs brevets antérieurs décrivent l'adjonction aux hydrates salins d'un agent stabilisant, destiné à maintenir l'agent nucléant en suspension et à le répartir dans la phase liquide et à empêcher la stratification de liquides de densité différente ou la sédimentation d'anhydrides dans la phase liquide.

Les inventeurs ont fait des essais systématiques de divers agents stabilsants déjà proposés notamment des éponges, des colles cellulosiques, des tufs, des zéolithes, des vases, des argiles thixotropiques en ajoutant à de l'hexahydrate de chlorure de calcium une proportion en poids comprise entre 5% et 20% du poids total et suivant deux rythmes, un rythme lent alternant quatre cycles par jour et un rythme rapide comportant 48 cycles par jour. Des essais ont montré que les propriétés physiques de l'hexahydrate de chlorure de calcium se modifiaient au cours des cycles successifs et que la durée de vie du matériau était au maximum de 60 cycles.

On a vu que les diatomites sont citées dans le brevet U.S. 3 986 969 comme donnant des résultats non satisfaisants.

On rappelle que le nombre de genres et d'espèce de diatomées est très élevé (environ 4000 espèces) et les inventeurs ont constaté que les résultats obtenus étaient très différents selon la provenance et la nature des diatomites et très mauvais avec certaines diatomites.

Un autre objectif de la présente invention est de procurer une poudre stabilisante à base de diatomites après avoir déterminé parmi celles-ci celles qui permettent de répéter un très grand nombre de cycles sans modification notable des propriétés physico-chimiques des hydrates salins.

L'invention concerne des matériaux absorbeurs et accumulateurs de calorie sous forme de chaleur lantente de fusion du type composés, en combinaison, d'un hydrate salin ayant une température de fusion comprise entre 15°C et 35°C, d'un agent nucléant dudit hydrate et 'une poudre stabilisante.

Les objectifs de l'invention sont atteints au moyen d'un matériau dans lequel la poudre stabilsante est un mélange de diatomites contenant une proportion en poids d'au moins 50% de diatomites aciculaires, ayant la forme d'aiguilles, dont la longueur est au moins égale à dix fois la largeur et est comprise entre 3 $\mu$ et 30 $\mu$.

Par exemple, ladite poudre est un mélange de diatomites contenant une proportion en poids d'au moins 50% de diatomites de type Synedras.

La poudre stabilisante est avantageusement un mélange naturel de diatomites séchées et légèrement broyées contenant une proportion de diatomites en forme de disque, de type Cyclotellas, inférieure à 10% du poids total de la poudre.

La proportion de poudre stabilsante dans un matériau selon l'invention est comprise avantageusement entre 5% et 15% du poids total du matériau et, de préférence, elle est de l'ordre de 12% de ce poids total. De préférence, un matériau selon l'invention est enfermé dans une enveloppe étanche, non conductrice de l'électricité.

Avantageusement, la poudre stabilisante est un mélange de diatomites ayant un idice de vide supérieur à dix.

On appelle indice de vide Iv d'une poudre le rapport entre le volume de vide et le volume de matière composant les particules. Le volume de vide Vv est égal à la différence entre le volume total Vt et le volume des particules Vp.

On a donc:

$$Iv = \frac{Vv}{Vp} = \frac{Vt - Vp}{Vp}.$$

Il existe des appareils qui permettent de mesurer un indice de vide relatif I'v qui est le rapport entre le volume de vide et le volume total

$$I'v = \frac{Vt - Vp}{Vt}.$$

On passe facilement d'un indice à l'autre par la relation

$$Iv = \frac{I'v}{1 - I'v}.$$

L'invention a pour résultat un nouveau matériau à base d'hydrates salins permettant de capter et/ou d'accumuler des calories, notamment de l'énergie solaire, sous forme de chaleur latente de fusion, de restituer celle-ci lors de la cristallisation de l'hydrate et de répéter un très grand nombre de cycles de façon réversible sans altération notable des propriétés du matériau. Des essais en cours réalisés sur de l'hexahydrate de chlorure du calcium ont motré qu'après 5000 cycles successifs, les propriétés du matériau n'étaient pas modifiées à la condition d'ajouter à l'hexahydrate une poudre stabilisante composée d'un mélange naturel de diamomite bien choisies.

On précise ici que les nombreux genres et espèces de diatomites connues, qui ont donné naissance à des couches sédimentaires exploitables, peuvent être rangées dans trois grandes catégories.

Une première catégorie, dont le type est l'espèce Synedra, est composée de carcasses siliceuses aciculaires, en forme d'aiguilles, ayant une largeur comprise entre 0,1 $\mu$ et 20 $\mu$ et une longueur comprise entre 5 $\mu$ et 200 $\mu$. Cette première catégorie est composée de carcasses élémentaires ayant une longueur au moins égale à 10 fois la largeur.

Une deuxième catégorie, dont le type est l'espèce Melosira, est composée de carcasses de forme générale cylindrique ou en forme de bigoudis.

Une troisième catégorie dont le type est l'espès Cyclotella, est composée de carcasses en forme de disques minces.

Dans les couches exploitées, ces espèces sont plus ou moins mélangées, mais on peut trouver des couches plus riches en espèce de l'une ou l'autre de chacune des trois catégories.

On peut différencier ces catégories en mesurant soit la densité apparente de la poudre non tassée, soit l'indice de vide qui est le rapport entre le volume vide et le volume de silice amorphe qui compose les squelettes de diatomites.

L'indice de vide des diatomites de la troisième catégorie (type cylotellas) est de l'ordre de 4,63. L'indice de vide des diatomites de la deuxième catégorie (type Melosiras) est de l'ordre de 9,45. L'indice de vide des diatomites de la première catégorie (type Synedras) que l'on trouve dans le commerce est de l'ordre de 7,78, mais celles-ci ont subi un traitement d'agglomération avec un fondant qui est généralement du chlorure de sodium car dans les utilisations actuelles de ces diatomites, on cherche à éviter que les aiguilles ne risquent de se séparer de la masse. Les inventeurs ont constaté que si l'on supprime ce traitement d'agglomération et si l'on prend des diatomites de type Synedras séchées et broyées légèrement, par exemple avec un broyeur à mâchoires, l'indice de vide est alors de 13,6.

Des essais systématiques effectués avec des mélanges naturels de diatomites de diverses provenances et de densité différente ont montré que les poudres composées de diatomites ayant un indice de vide inférieur à 5 conduisaient à une dégradation rapide du matériau et que l'on obtenait une bonne poudre stabilisante en utilisant des diatomites ayant un indice de vide supérieur à 5 et, de préférence, supérieur à 10 et en incorporant au matériau une proportion de cette poudre comprise entre 5% et 15% et, de préférence, de l'ordre de 12% du poids total.

4

**0 019 573**

L'observation sous le microscope d'échantillons cristallisés de matériaux contenant différents types de diatomites après un certain nombre de cycles de fusion et de cristallisation a permis de constater que les diatomites de type Cyclotella et même les diatomites de type Melosira étaient repoussées par le front de cristallisation lors de la croissance des cristaux et formaient peu à peu des amas. Au contraire, les diatomites aciculaires, de type Synedra, qui sont composées d'aiguilles restent en incusion dans les cristaux ce qui explique la meilleure conservation de l'efficacité de ces diatomites après de nombreux cycles répétés.

Des essais systématiques ont montré que l'on obtient une bonne conservation des propriétés du matériau après un grand nombre de cycles dès lors que la poudre de diatomites contient au moins 50% en poids de diatomites de type Synedras et contient moins de 10% en poids de diatomites du type Cyclotellas. La poudre de diatomites peut contenir une certaine proportion en poids de diatomites de type Melosiras mais cette proportion doit rester inférieure à 30%.

De préférence, l'hydrate salin qui entre dans la composition d'un matériau selon l'invention est de l'hexahydrate de chlorure de calcium industriel qui contient des traces d'hexahydrate de chlorure de strontium qui est un agent nucléant de l'hexahydrate de chlorure de calcium.

Le procédé d'élaboration d'un matériau selon l'invention comprend les étapes suivantes. On part de chlorure de calcium industriel qui est vendu sous forme de paillettes de monohydrate et de dhydrate de calcium. On ajoute à ces paillettes environ 55 g d'eau pour 100 g de paillettes qui se dissolvent en dégageant de la chaleur. On laisse la température descendre jusqu'à 30° et on sature la solution en paillettes. On prélève un échantillon de la solution saturée et on la cristallinse à 28° sous forme de cristaux d'hexahydrate ce qui permet de vérifier que la teneur en eau correspond à l'eau de cristallisation de l'hexahydrate. On incorpore ensuite dans la solution qui est à une température supérieure à 30° de la poudre stabilisante de diatomites ayant un indice de vide au moins égal à 5 et, de préférence, supérieur à 10. On verse de la poudre en brassant jusqu'à ce que le matériau ait une consistance pâteuse, ce qui correspond à une proportion de poudre stabilisante comprise entre 5 et 15% du poids total. On précise que les diatomites naturelles sont séchées et broyées légèrement, de telle sorte que l'on obtienne, de préférence, des aiguilles ayant une longueur de l'ordre de 3 μ à 30 μ et une longueur supérieure à 10 fois la largeur. Il existe également dans le commerce des saumures de chlorure de calcium ayant un titre de chlorure inférieur à la composition stoechiométrique de l'hexahydrate. Dans ce cas, on enrichit d'abord ces saumures en dissolvant dans celles-ci des paillettes de chlorure de calcium industriel après avoir chauffé la saumure que l'on sature à une température voisine de 30°.

On obtient finalement un matèriau qui présente une consistance pâteuse aux températures supérieures à 30°, de telle sorte qu'il peut être facilement moulé ou injecté dans des cavites. Lorsque la température descend au-dessous de 28°, l'hexahydrate cristallise et on obtient des blocs solides très résistants auxquels on peut donner, par moulage, une forme quelconque, par exemple une forme parallélépipédique qui facilite la manutention et le stockage à température ambiante.

Selon le problème à résoudre et la température que l'on désire obtenir, on peut composer un matériau selon l'invention en remplaçant l'hexahydrate de chlorure de calcium par un autre hydrate salin on par un mélange d'hydrates.

On peut ajouter une certaine proportion de chlorure de sodium au chlorure de calcium et, dans ce cas, la température de fusion décroît proportionnellement à la teneur en chlorure de sodium.

Le tableau 1 ci-après indique les principaux hydrates salins ayant une température de fusion comprise entre 15° C et 35° C, qui peuvent entrer dans la composition d'un matériau selon l'invention.

5

Tableau 1

| Type de fusion | Sel | Molécules d'eau | t° de fusion | Chaleur latente de fusion |
|---|---|---|---|---|
| Congruente | NaOH | 3,3 | 15,5 | 46 Cal/g |
| | KF | 4 | 18,5 | |
| | NaClO | 5 | 24,5 | |
| | Mn(NO 3)2 | 6 | 25,3 | |
| | H4 P2 07 | 1,5 | 26 | |
| | H3 PO4 | 0,5 | 26 | |
| | Li NO 3 | 3 | 30 | 70 Cal/g |
| Semi congruente | Ca Cl$_2$ | 6 | 29,8 | 40,7 Cal/g |
| non | Na 2CO 3 | 10 | 32 | 51 à 60 Cal/g |
| congruente | Na 2SO 4 | 10 | 32,8 | 48 à 60 Cal/g |

Selon une caractéristique importante, le matériaue selon l'invention est enfermé dans une enveloppe étanche non conductrice de l'électricité. En effet, il a été constaté au cours des essais que des différence de potentiel électrique apparaissaient dans les solutions d'hydrates salins et que, si des courants électriques pouvaient circuler soit dans le matériaue, soit dans l'enveloppe que le contenait, ces courants entraînaient une modification du potentiel chimique donc une dégradation rapide du matériau. La porosité de la poudre de diatomites s'oppose à la dégradation du matériau car elle retient sur place les éléments provenant d'une décomposition du matériau et elle favorise donc la recomposition de ces éléments et la réversiblité des transformations. Mais il faut éviter de rendre le matériau conducteur de l'électricité par exemple en lui incorporant des particules métalliques dans le but d'améliorer la conductibilité thermique.

Il faut également éviter de placer le matériau dans des enceintes métalliques dans le but de favoriser les échanges thermiques.

Le matériau selon l'invention doit être placé dans des enveloppes non conductrices de l'électricité par exemple dans des enveloppes en un matériau isolant électrique tel que du verre, de la céramique ou des matières plastique ou bien dans des enceintes portant un revêtement intérieur isolant électrique.

La description suivante se réfère aux dessins annexés qui représentent sans aucun caractère limitatif, des exemples d'applications d'un matériau selon l'invention.

La figure 1 est une coupe transversale d'un dallage accumulateur de chaleur selon l'invention.

Les figures 2 et 3 sont une vue de face, de l'extérieur et une coupe transversale selon III-III d'un volet pivotant garni de matériau selon l'invention.

Les figures 4 et 5 sont une vue de face et une coupe partielle d'un volet à persiennes selon l'invention.

Les figures 6, 7 et 8 sont une vue de face et des coupes verticales de dispositifs pare soleil composés de lamelles garnies d'un matériau selon l'invention.

La figure 9 est une vue en perspective avec coupe transversale d'une portion de paroi semi transparente garnie de matériau selon l'invention.

La figure 10 est une coupe verticale d'un mur composite comportant des blocs garnis d'un matériau selon l'invention.

La figure 11 est une vue en perspective d'un bloc de construction d'un mur selon la figure 10.

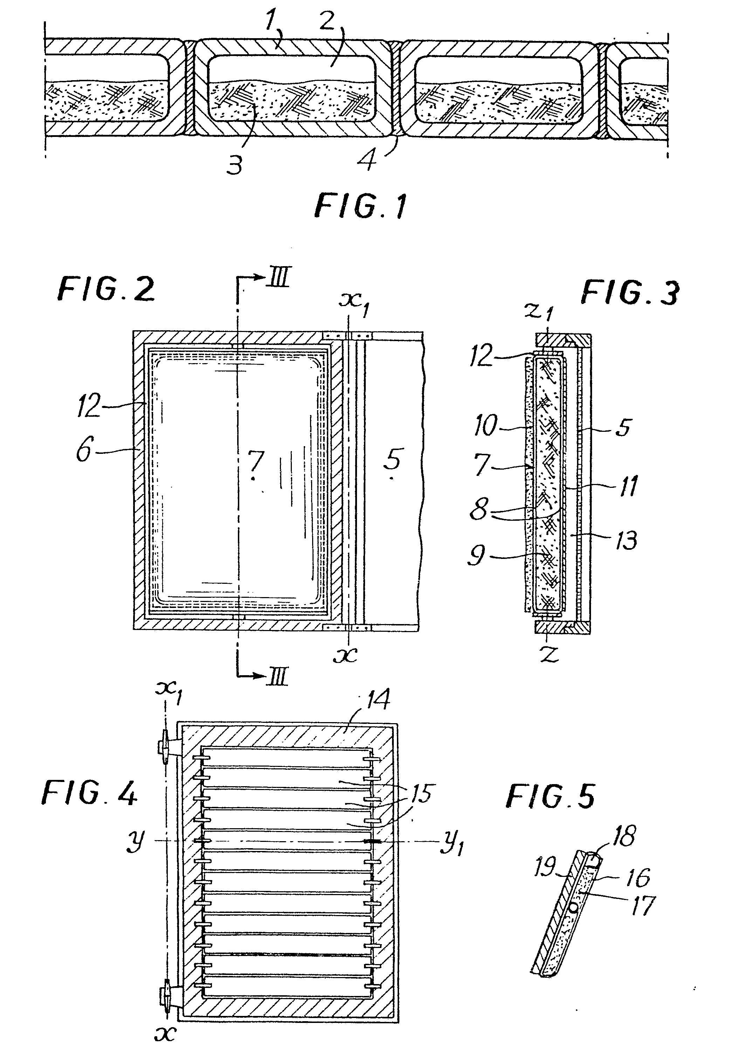

La figure 1 représente une coupe verticale d'un dallage ou d'un plancher accumulateur de calories. Celui-ci est composé de pavés 1 en un matériau transparent ou semi-transparent et isolant électrique, par exemple en verre ou en matière plastique, par exemple en polycarbonate. Les pavés 1 sont creux et délimitent chacun une cavité 2 qui contient un volume 3 de matériau selon l'invention composé d'hexahydrate de calcium industriel mélangé à une poudre stabilisante de diatomites. Les pavés 1 sont assemblés entre eux par des joints 4.

Le dallage ou le plancher réalisé avec des pavés est exposé au soleil. C'est par exemple le dallage d'une véranda vitrée ou d'une serre de culture de plantes en pots. L'insolation directe des pavés fait fondre le matériau 3 par effet de serre et celui-ci accumule pendant le jour de la chaleur latente à température constante. Pendant la nuit, le matériau 3 cristallise lentement en restituant de la chaleur et le dallage constitue un sol chauffant.

Les risques du rupture dus au retrait du matériau 3 peuvent être minimisés soit en emballant le matériau 3 dans des enveloppes étanches en plastique, soit en limitant l'epaisseur de matériau 3 à environ 2 cm, soit en enduisant la paroi intérieure de la cavité 2 d'une graisse au silicone qui évite le collage du matériau 3 au verre, soit en remplaçant le verre par une matière plastique, par exemple par un polycarbonate. On peut également remplacer les pavés creux 1 par deux profilés en forme de U qui sont assemblés bord à bord de façon étanche.

Les figures 2 et 3 représentent une autre application d'un matériau selon l'invention sur un obturateur mobile et plan de paroi vitrée.

La figure 2 représente une ouverture vitrée 5, par exemple une fenêtre qui est équipée d'un volet d'obturation.

La figure 2 représente le volet en position d'ouverture vu de l'extérieur. Elle illustre le cas où l'obturateur est un volet pivotant qui est rabattu vers l'extérieur en pivotant autour d'un axe x x1. Cet emxeple n'est pas limitatif et il est précisé que la même application s'étend à tous les obturateurs plans connus tels que volets roulants ou amovibles, rideaux roulants ou coulissants, stores persiennes etc.

Le volet 6 comporte un réservoir 7 d'accumulation de calories qui est constitué par une enveloppe isolante 8 remplie d'un matériau 9 selon l'invention. La face arrière de l'enveloppe 8 est revêtue d'une couche 10 d'un matériau isolant thermique. La face avant peut être recouverte d'un revêtement absorbant 11 éventuellement sélectif, par exemple d'une peinture sombre. De plus, la face avant peut être placés derrière une paroi transparente pour créer un effet de serre.

Le réservoir 7 est monté à l'intérieur d'un cadre 12 qui est articulé autour d'un axe z z1 contenu dans le plan du volet, cet axe pouvant être horizontal, vertical ou oblique.

Pendant l'hiver, la face absorbante 11 est tournée vers l'extérieur pendant la journée et elle absorbe l'énergie solaire qui s'accumule dans le matériau 0 sour forme de chaleur latente.

Le soir, on rabat le volet devant la paroi vitrée 5 en le faisant pivoter autour de l'axe x x1 et, de ce fait, la face isolée 10 se trouve placée du côté extérieur et la face 11 se trouve en regard de la paroi vitrée 5 dont elle est séparée par un faible espace 13. La figure 3 représente une coupe du volet en position fermée. Dans cette position, les calories accumulées dans le matériau 9 réchauffent pendant la nuit l'espace 13. Non seulement les déperditions de chaleur à travers les parois vitrées sont supprimées, mais même une partie des calories est transmise pendant la nuit vers l'intérieur à travers la vitre 5.

La disposition du réservoir 7 à l'intérieur du cadre 12 articulé autour d'un axe z z1 permet d'utiliser le même reservoir 7 pour climatiser le logement pendant l'été à la condition de maintenir les volets fermés ou entrebaillés pendant les heures d'ensoleillement ce qui est le cas dans les pays chauds. Pour arriver à ce réslultat, on fait pivoter le cadre 12 autour de l'axe z z1, tous les soirs et tous les matins, de sorte que pendant la journée, la face 11 est tournée vers l'appartement et absorbe des calories venant de l'appartement, ce qui rafraîchit celui-ci. Pendant la nuit, la face 11 est tournée vers l'extérieur et lorsque la température nocturne descend au-dessous de la température de fusion, le matériau 9 se solidifie en libérant des calories.

Le même dispositif est applicable à des volets à lamelle formant des persiennes.

La figure 4 représente un tel volet, vu de face, en position fermée. Ce volet est pivotant autour d'un axe vertical x x1. Il comporte des lamelles 15 formant des persiennes. Chaque lamelle 15 est articulée autour d'un axe horizontal y y1, de telle sorte que l'on peut faire varier l'inclinaison des persiennes pour régler l'aération et la lumière passant entre elles.

La figure 5 est une coupe transversale à plus grande échelle d'une lamelle. Celle-ci est composée d'une enveloppe isolante 16, par exemple d'une enveloppe en matière plastique rigide, qui est remplie de matériau 17 accumulateur de chaleur, avec une réserve de gaz 18 pour absorber les variations de volume.

Une des faces de chaque lamelle porte un revêtement isolant thermique 19. L'autre face peut être peinte d'un revêtement absorbant qui peut être sélectif.

Comme dans le cas des figures 2 et 3, les lamelles 15 peuvent servir à la climatisation pendant l'été à condition d'inverser de 180° leur position matin et soir.

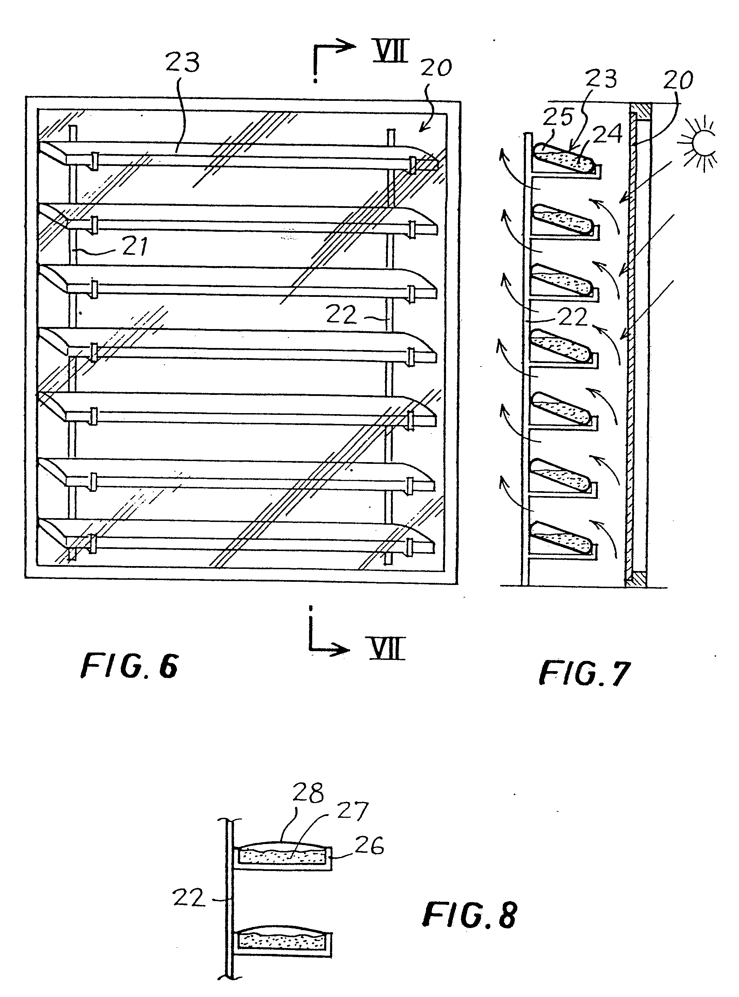

La figure 6 représente une vue de face de l'extérieur d'une paroi vitrée 20 d'un logement. Derrière cette paroi est placé un dispositif pare soleil composé de deux supports 21 et 22 sur lesquels sont posées de lamelles fixes 23 parallèles entre elles. Les lamelles 23 sont en un matériau isolant électrique, par exemple en matière plastique. Elles sont creuses et constituent des enveloppes étanches qui sont garnies de matériau 24 accumulateur de chaleur latente selon l'ivention. Pendant la journée les lamelles 23 reçoivent les rayons de soleil à travers la vitre 20. Le matériau 24 fond et accumule des calories qu'il restitue pendant la nuit.

La figure 7 représente une coupe verticale selon VII-VII d'un premier mode de réalisation dans lequel les lamelles 23 sont légèrement inclinées vers le haut en s'éloignant de la paroi vitrée 20. Cette disposition favorise la bonne circulaiton de l'air chaud qui s'écoule suivant les flèches. De plus, chaque lamelle contient une bulle de gaz 25 pour compenser les variations de volume du matèriau 24 et cette bulle 25 freine les échanges thermiques. Grâce à la disposition inclinée, la bulle 25 se loge à la partie arrière des lamelles qui est la moins ensoleillée.

La figure 8 est une coupe verticale partielle d'un autre mode de réalisation d'un pare soleil. Dans cet exemple les supports 21 et 22 portent des bacs 26 en matière plastique ou en métal plastifié intérieurement qui sont garnis de matériau 27 selon l'invention et qui sont recouverts d'un couvercle 28 en matière plastique transparente ou translucide, de telle sorte qu'il se produit un effet de serre dans chaque bac qui améliore l'absorption de l'énergie solaire.

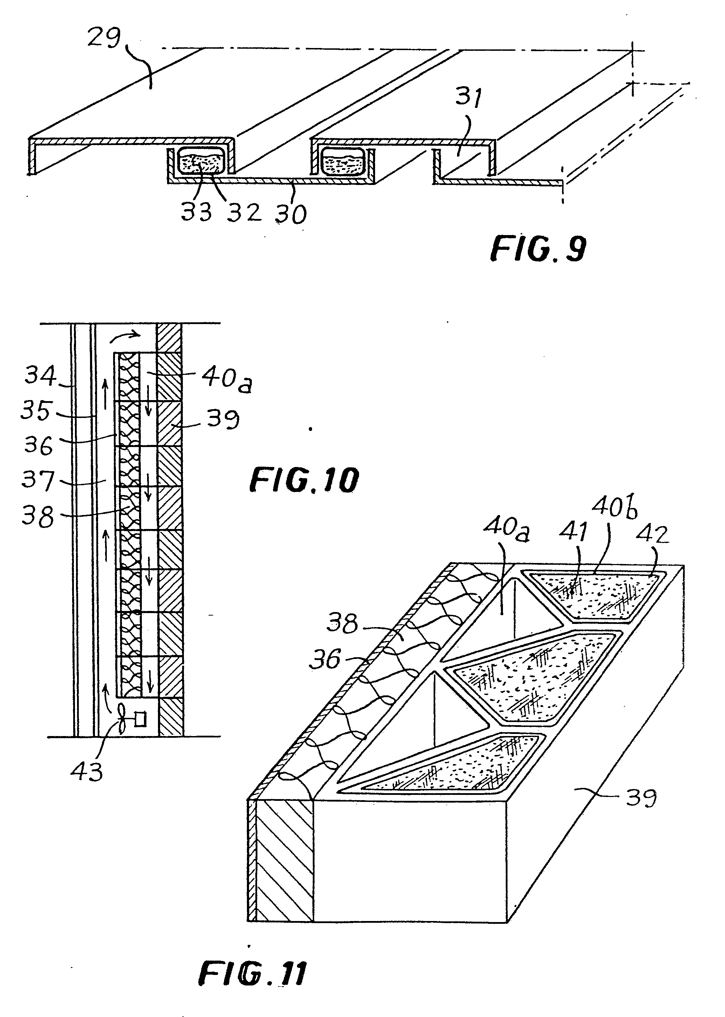

La figure 9 est une vue en perspective avec coupe transversale d'une portion de paroi semi transparente, par exemple d'une couverture ou d'un bardage de bâtiment. Cette paroi est formée de bacs 29, 30 en forme de U qui sont disposés tête bêche et qui sont imbriqués l'un dans l'autre en délimitant entre eux des espaces clos 31. Les espaces 31 sont garnis d'une enveloppe étanche et isolante électrique 32, en forme de boudin, qui contient un matériau 33 accumulateur de chaleur latente. Les bacs 29, 30 peuvent être des bacs autoporteurs posés sur des ossatures perpendiculaires aux bacs. On peut également loger dans les espaces 31 des supports tubulaires et placer les enveloppes 32 remplies de matériau 33 dans ces supports tubulaires. Les bacs 29 et 30 sont composés d'une matière transparente ou translucide, par exemple de profilés en verre ou en matière plastique. Le matériau 33 absorbe une partie de la lumière qui tombe sur la paroi pendant le jour et la restitue pendant la nuit. Une telle paroi peut être utilisée comme couverture de serre ou pour constituer des verrières décoratives ou des parois de véranda.

Une telle paroi peut capter statiquement l'énergie solaire et la restituer. Elle peut stocker de l'ordre de 1 KwH par m$^2$.

La figure 10 représente une coupe verticale d'un mur composite permettant de capter et de stocker l'énergie solaire sous forme de chaleur latente et la figure 11 est une vue en perspecitive d'un bloc permettant de construire un tel mur.

Ce mur comporte une paroi externe vitrée, par exemple une double vitre 34 et 35. Derrière cette paroi vitrée se trouve une surface absorbante 36 qui est séparée de la paroi vitrée par un couloir vertical 37. La surface absorbante est posée contre un matelas isolant thermique 38, par exemple un matelas de laine de verre. Derrière ce matelas isolant se trouvent des corps creux 39 en béton, en céramique ou en tout autre matériau de construction, percés d'alvéoles 40. Les alvéoles 40a situés du côté du matelas absorbant sont vides et leur superposition délimite des canaux verticaux. Les alvéoles 40b situés du côté du local sont garnis de matériau 41 selon l'invention qui est placé à l'intérieur d'enveloppes étanches et souples 42 en matière plastique.

Le couloir vertical 37 communique avec les canaux verticaux 40a à la partie supérieure et à la partie inférieure du mur. Il forme un circuit fermé dans lequel est disposé un ventilateur 43 qui permet de produire une circulation forcée de l'air suivant les flèches.

La figure 11 représente une forme de réalisation des blocs 39. Bien entendu, les alvéoles 40a et 40b peuvent avoir des formes différentes. Le matelas isolant 38 et le revêtement absorbant 36 peuvent être fixés sur chaque bloc en usine, ce qui facilite la construction du mur sur le chantier. On peut également monter le mur avec des blocs creux dont certains alvéoles sont garnis de matériau 41 puis placer contre la face externe du mur un matelas isolant 38 et un absorbeur 37 avant de mettre en place les vitres 34 et 35.

La particularité de ce mur solaire réside dans le fait que le matériau 41 de stockage de chaleur se trouve isolé de l'absorbeur 36 ce qui permet de contrôler le transport de calories pendant le jour vers le matériau accumulateur en mettant en route le ventilateur puis d'arrêter celui-ci pendant la nuit pour limiter les pertes nocturnes. Ce mur se comporte donc comme une diode thermique. Le transfert des calories vers le volume habité se fait par conduction à travers la face arrière des blocs 39.

D'autre part, le stockage de calories est réalisé sous forme de chaleur latente de fusion à température constante, par exemple à une température de 28°C environ si l'on utilise un matériau 41 composé d'hexahydrate de chlorure de calcium, ce qui accroît la capacité de stockage de calories et simplifie la régulation de température.

## Revendications

1. Matériau absorbeur et accumulateur de calories sous forme de chaleur latente de fusion du type composé, en combinaison, d'un hydrate salin ayant une température de fusion comprise entre 15°C et 35°C, d'un agent nucléant dudit hydrate et d'une poudre stabilisante, caractérisé en ce que ladite poudre est un mélange de diatomites contenant une proportion en poids d'au moins 50% de diatomites aciculaires, ayant la forme d'aiguilles dont la longueur est au moins égale à dix fois la largeur et est comprise entre 3 μ et 30 μ.

2. Matériau selon la revendication 1, caractérisé en ce que ladite poudre est un mélange de diatomites contenant une proportion en poids d'au moins 50% de diatomites de type Synedras.

3. Matériau selon l'une quelconque des revendications 1 et 2, caractérisé en ce que ladite poudre est un mélange de diatomites séchées et légèrement broyées contenant une proportion de diatomites en forme de disques aplatis, de type Cyclotella, inférieure à 10% du poids total de la poudre.

4. Matériau selon l'une quelconque des revendications 1 à 3, caractérisé en ce que ladite poudre est un mélange de diatomites ayant un indice de vide supérieur à dix.

5. Matériau selon l'une quelconque des revendications 1 à 4, caractérisé en ce qu'il contient une proportion de poudre stabilisante comprise entre 5% et 15% du poids total du matériau et, de préférence, de l'ordre de 12%.

6. Matériau selon l'une quelconque des revendications 1 à 5, caractérisé en ce que ledit hydrate salin est de l'hexahydrate de chlorure de calcium industriel qui contient de l'hexahydrate de chlorure de strontium faisant fonction d'agent nucléant de l'hexahydrate de chlorure de calcium.

7. Matériau selon l'une quelconque des revendications 1 à 6, caractérisé en ce qu'il est enfermé dans une enveloppe étanche non conductrice de l'électricité.

8. Application d'un matériau selon la revendications 7, caractérisée en ce que lesdites enveloppes ont la forme de lamelles fixes creuses (23), parallèles entre elles, qui sont garnies de matériau accumulateur de chaleur (24), qui sont placés derrière une paroi vitrée (20) d'un logement et qui constituent des pare soleil.

9. Application selon la revendication 8, caractérisé en ce que lesdites lamelles (23) sont légèrement inclinées vers le haut en s'éloignant de ladite paroi vitrée.

10. Application selon l'une quelconque des revendications 8 et 9, caractérisée en ce que lesdites lamelles ont une face supérieure (28) transparente.

11. Application d'un matériau selon l'une quelconque des revendications 1 à 7, caractérisée en ce qu'il est enfermé dans des pavés de verre (1) ou en matière plastique transparente qui constituent le dallage d'un local exposé au soleil.

12. Application d'un matériau selon l'une quelconque des revendications 1 à 7, caractérisée en ce qu'il est incorporé dans les espaces délimités entre des bacs (29, 30) en forme de U transparents, qui sont imbriqués l'un dans l'autre, et qui constituent une paroi semi transparente de couverture ou de bardage d'un bâtiment.

13. Application d'un matériau selon la revendication 7 dans un obturateur (6) plan et mobile de paroi vitrée (5), caractérisée en ce que ledit obturateur comporte une ou plusieurs enveloppes (8) non conductrices contenant ledit matériau (9), lesquelles enveloppes ont une forme aplatie et sont pivotantes par rapport à un axe ($z z_1$) situé dans le plan de l'obturateur.

14. Application selon la revendication 13, caractérisée en ce que l'une des deux faces desdites enveloppes (8) est revêtue d'un isolant thermique (10) tandis que la deuxième face, opposée à la première, peut porter un revêtement absorbant (11).

15. Application d'un matériau selon l'une quelconque des revendications 1 à 7, à la construction d'un mur solaire, caractérisée en ce que ledit matériau est placé dans les alvéoles (40b), situés du côté intérieur dudit mur, de corps creux (39) qui composent ledit mur, lesquels corps creux comportent d'autres alvéoles vides superposés (40a) qui déterminent des canaux verticaux et ledit mur comporte, en outre, une surface absorbante (36) qui est séparée desdits corps creux par un matelas isolant thermique (38) et qui est disposée derrière une paroi vitrée (34, 35) dont elle est séparée par un couloir vertical (37), lequel couloir commique avec les extrémités inférieure et supérieure desdits canaux et forme, avec ceux-ci, un circuit fermé dans lequel est disposé un ventilateur (43).

## Patentansprüche

1. Material zur Aufnahme und Speicherung von Wärme als latente Schmelzwärme, bestehend aus einem Salzhydrat mit einer Schmelztemperatur zwischen 15°C und 35°C in Kombination mit einem Mittel zum Auskristallisieren des Hydrats (Nukleationsmittel) und einem Stabilisationspulver, dadurch gekennzeichnet, daß das Pulver ein einem Gewichtsanteil von wenigstens 50% an nadeligen Infusorienerden in Form von Nadeln, deren Länge zumindest der zehnfachen Breite entspricht und zwischen 3 μm und 30 μm liegt, enthaltendes Gemisch von Infusorienerden ist.

2. Material nach Anspruch 1, dadurch gekennzeichnet, daß das Pulver ein Gemisch von Infusorienerden mit einem Gehalt an Infusorienerden des Synedras-Typs entsprechend einem Gewichtsverhältnis von zumindest 50% ist.

3. Material nach einem der Ansprüche 1 und 2, dadurch gekennzeichnet, daß das Pulver ein Gemisch aus getrockneten und leicht gemahlenen Infusorienerden mit einem Gehalt an Infusorienerden des Typs Cyclotella in Form von abgeflachten Platten entsprechend einem Verhältnis von weniger als 10% des Gesamtgewichtes des Pulvers ist.

4. Material nach einem der Ansprüche 1 bis 3, dadurch gekennzeichnet, daß das Pulver ein Gemisch aus Infusorienerden mit einem Hohlstellenindex von mehr als zehn ist.

5. Material nach einem der Ansprüche 1 bis 4, dadurch gekennzeichnet, daß es einen Anteil an Stabilisationspulver in einem Bereich zwischen 5% und 15%, vorzugsweise 12%, des Gesamtgewichtes des Materials enthält.

6. Material nach einem der Ansprüche 1 bis 5, dadurch gekennzeichnet, daß das Salzhydrat industrielles Calciumchlorid-Hexahydrat ist, welches Strontiumchlorid-Hexahydrat als Nukleationsmittel für Calciumchlorid-Hexahydrat enthält.

7. Material nach einem der Ansprüche 1 bis 6, dadurch gekennzeichnet, daß es in eine dichte, elektrisch nicht leitende Hülle eingeschlossen ist.

8. Verwendung eines Materials nach Anspruch 7, dadurch gekennzeichnet, daß die Hüllen die Form von fixen, zueinander parallelen und mit wärmespeicherndem Material (24) vesehenen Hohllamellen (23) haben, die hinter einer Glaswand (20) eines sie aufnehmenden Raumes angeordnet sind und eine Sonnenblende bilden.

9. Verwendung nach Anspruch 8, dadurch gekennzeichnet, daß die Lamellen (23) geringfügig nach oben geneigt und von der Glaswand weggerückt sind.

10. Verwendung nach einem der Ansprüche 8 und 9, dadurch gekennzeichnet, daß die Lamellen eine transparente Oberseite (28) aufweisen.

11. Verwendung eines Materials nach einem der Ansprüche 1 bis 7, dadurch gekennzeichnet, daß es in Bausteinen aus Glas (1) oder transparentem Plastikmaterial eingeschlossen ist, die den Belag eines der Sonne ausgesetzten Raumes bilden.

12. Verwendung eines Materials nach einem der Ansprüche 1 bis 7, dadurch gekennzeichnet, daß es in die von transparenten, einander überlappenden U-förmigen Schalen (29, 30) begrenzten Räume, welche Schalen eine semitransparente Decken- oder Fassadenwand eines Gebäudes bilden, eingebaut ist.

13. Verwendung eines Materials nach Anspruch 7 in einer ebenen und beweglichen Verschlußvorrichtung (6) für eine Glaswand (5), dadurch gekennzeichnet, daß die Verschlußvorrichtung eine oder mehrere nichtleitende Hülle(n) (8) umfaßt, die das Material (9) enthalten, welche Hüllen eine abgeflachte Form haben und bezüglich einer in der Ebene der Verschlußvorrichtung liegenden Achse ($z\, z_1$) schwenkbar sind.

14. Verwendung nach Anspruch 13, dadurch gekennzeichnet, daß eine der beiden Flächen der Hüllen (8) mit einer Wärmeisolierung (10) verkleidet ist, während die zweite, gegenüber der ersten befindliche Fläche eine absorbierende Verkleidung (11) tragen kann.

15. Verwendung eines Materials nach einem der Ansprüche 1 bis 7 bei der Konstruktion einer Sonnenwand, dadurch gekennzeichnet, daß das Material in an der Innenseite der Wand vorgesehene Waben (40b) von die Wand bildenden Hohlkörpern (39) eingesetzt ist, welche Hohlkörper andere, übereinanderliegende, leere Waben (40a) aufweisen, die vertikale Kanäle festlegen, und daß die Wand weiters eine absorbierende Oberfläche (36) aufweist, die von den Hohlkörpern durch einen Wärmeisolierpolster (38) getrennt und hinter einer Glaswand (34, 35) angeordnet ist, von der sie durch einen vertikalen Gang (37) getrennt ist, welcher Gang mit den unteren und oberen Enden der Kanäle in Verbindung steht und mit diesen einen geschlossenen Kreislauf bildet, in welchem ein Ventilator (43) vorgesehen ist.

## Claims

1. Material absorbing and accumulating calories in the form of latent emlting heat, of the type composed of a salty hydrate of melting point varying between 15°C and 35°C in combination with a nucleating agent of said hydrate and a stabilizing powder, characterized in that the said powder is a mixture of diatomites containing a proportion by weight of at least 50% acicular diatomites of needle shape, the length of which is at least equal to ten times the width, and is between 3 μ and 30 μ.

2. Material according to claim 1, characterized in that said powder is a mixture of diatomites containing a proportion by weigh of at least 50% diatomites of the Synedras type.

3. Material according to any one of claims 1 and 2, caracterized in that the said powder is a mixture of dry diatomites, slightly ground, and containing a proportion fo flattened disc-shaped diatomites, of the Cyclotella type, less than 10% of the total weight of the powder.

4. Material according to any one of claims 1 to 3, characterized in that said powder is a mixture of diatomites having a vacuum index greater than ten.

5. Material according to any one of claims 1 to 4, characterized in that it contains a proportion of stabilizing powder varying between 5% and 15% of the total weight of the material and preferably of the order of 12%.

6. Material according to any one of claims 1 to 5, characterized in that the said salty hydrate of the hexahydrate of industrial calcium chloride which contains some hexahydrate of strontium chloride acting as a nucleating agent on the hexahydrate of calcium chloride.

7. Material according to any one of claims 1 to 6, characterized in that it is contained inside a tight enclosure, which is not a conductor of electricity.

8. Application of a material according to claim 7, characterized in that the said enclosures are in the shape of hollow fixed lamellae (23), parallel together and lined with a heat-storing material (24), which lamellae are placed behind a glass partition (20) of a housing and constitute sun-shades.

9. Application according to claim 8, characterized in that said lamellae (23) are slightly inclined upwards and away from the said glass partition.

10. Application according to any one of claims 8 and 9, characterized in that the said lamellae have a transparent upper face (28).

11. Application of a material according to any one of claims 1 to 7, characterized in that it is contained inside glass slabs (1) or slabs of transparent plastic which constitute the paving of premises exposed to the sun.

12. Application of a material according to any one of claims 1 to 7, characterized in that it is incorporated in the spaces formed between transparent U-shaped containers (29, 30), one overlapping the other, and constituting a semi-transparent covering wall or weatherwall for a building.

13. Application of a material according to claim 7 in a flat and movable obturator (6) of glass partition (5), characterized in that said obturator comprises one or more non-conducting enclosures (8) containing the said material (9), which enclosures have a flattened shape and are pivotable with respect to an axis ($z\,z_1$) situated inside the plane of the obturator.

14. Application according to claim 13, characterized in that one of the two faces of the said enclosures (8) is coated with a heat-insulating material (10) whereas the second face, opposite the first, can be coated with an absorbing material (11).

15. Application of a material according to any one of claims 1 to 7, to the construction of a solar wall, characterized in that the said material is placed in the honeycomb cells (40b) situated on the inside of the wall, of hollow bodies (39) composing said wall, which hollow bodies comprise other superimposed hollow cells (40a) which define vertical channels and said wall further comprises an absorbing surface (36) which is separated from from the said hollow bodies by a heat-insulating pad (38) and which is disposed behind a glass partition (34, 35) from which it is separated by a vertical conduit (37), which vertical conduit communicates with the lower and upper ends of the said channels and form therewith a a closed circuit in which is placed a blower (43).

0 019 573

FIG.1

FIG.2

FIG.3

FIG.4

FIG.5

13

**FIG. 6**

**FIG. 7**

**FIG. 8**

FIG.9

FIG.10

FIG.11